# EUROPÄISCHE PATENTSCHRIFT

(11) **EP 2 795 695 B1**
(45) Veröffentlichungstag und Bekanntmachung des Hinweises auf die Patenterteilung: **12.06.2019**
(21) Anmeldenummer: 12798187.6
(22) Anmeldetag: 14.11.2012
(51) Int. Cl.: H01M 2/26, H01M 2/30

(54) **ELEKTRISCHE ENERGIESPEICHERZELLE UND VERFAHREN ZUM HERSTELLEN EINER ELEKTRISCHEN ENERGIESPEICHERZELLE**
ELECTRICAL ENERGY STORAGE CELL AND METHOD FOR PRODUCING AN ELECTRICAL ENERGY STORAGE CELL
CELLULE D'ACCUMULATION D'ÉNERGIE ÉLECTRIQUE ET PROCÉDÉ DE FABRICATION D'UNE CELLULE D'ACCUMULATION D'ÉNERGIE ÉLECTRIQUE

(30) Priorität: 19.12.2011 DE 102011089088
(43) Veröffentlichungstag der Anmeldung: 29.10.2014
(73) Patentinhaber: Robert Bosch GmbH, 70442 Stuttgart (DE)
(72) Erfinder: KESSLER, Martin, 73527 Schwaebisch Gmuend (DE); DOEGE, Volker, 89561 Dischingen (DE); TIEFENBACH, Andy, 71665 Vaihingen-Horrheim (DE); SCHMIDT, Alexander, 78166 Donauechingen (DE)
(86) Internationale Anmeldenummer: PCT/EP2012/072574
(87) Internationale Veröffentlichungsnummer: WO 2013/092009

(56) Entgegenhaltungen:
- US-A- 5 227 267
- US-A- 6 040 086
- US-A1- 2002 061 438
- US-A1- 2007 092 792

## Beschreibung

Die Erfindung betrifft eine elektrische Energiespeicherzelle und ein Verfahren zum Herstellen einer elektrischen Energiespeicherzelle.

### Stand der Technik

Üblicherweise wird elektrischen Energiespeicherzellen Gleichstrom entnommen bzw. Gleichstrom in diese eingespeist. Daher ist der bisher bekannte Aufbau von Energiespeicherzellen auf die Optimierung der Ohm'schen Innenwiderstände und der spezifischen Energie- bzw. Leistungsdichte der Energiespeicherzellen ausgelegt.

Die Druckschrift US 2007/0148542 A1 offenbart beispielsweise ein Batterieelektrodendesign mit einem Elektrodenstapel, welcher über durchgängige Polkontakte durch die Elektrodenflächen verbunden ist.

Die Druckschrift US 2009/0029240 A1 offenbart eine zylindrische Batteriezelle mit Elektrodenwickeln, welche jeweils an zwei Enden der Batterie über Kontakttabs untereinander verbunden sind.

Die Druckschrift US 2002/061438 offenbart eine Batteriezelle mit einem Elektrodenwickel. Dabei sind im Elektrodenwickel vorgesehene Kathodenelemente und Anodenelemente jeweils mittels eines Kontaktelements miteinander verbunden und ferner an einem entsprechenden Pol angeschlossen.

Die Druckschrift US 5 227 267 beschreibt eine Batteriezelle umfassend eine erste und zweite Gruppe von Elektrodenelementen, die jeweils mit einem Kontaktelement verbunden sind. Das jeweilige Kontaktelement ist mittels eines Kontaktverbinders an einem entsprechenden Pol angeschlossen.

Die Druckschrift US 6 040 086 offenbart eine Festkörperbatteriezelle, die eine Elektrodeneinheit in Form eines Elektrodenwickels und ein Kontaktelement umfasst.

Dabei sind im Elektrodenwickel vorgesehene Kathodenelemente und Anodenelemente mittels Schweißens miteinander verbunden.

Die Druckschrift US 2007/092792 offenbart eine Batteriezelle mit einer Mehrzahl von Anodenplatten und Kathodenplatten, die jeweils mittels eines entsprechenden Kontaktelements am Pol angeschlossen sind.

In vielen Anwendungen elektrischer Energiespeicherzellen werden Speicherzellen in serieller oder paralleler Anordnung miteinander zu Batteriemodulen verschaltet, um gewünschte Ausgangsparameter wie Gesamtspannung, Spannungsbereich, Energieinhalt oder Leistungsdichte einzustellen. Werden aus derartigen Energiespeicherzellen Ströme mit steigendem Wechselanteil entnommen, steigt frequenzabhängig der Einfluss der verteilten Induktivität der Energiespeicherzellen. Die induktiven Verluste einer Energiespeicherzelle setzen sich aus den individuellen Anteilen der Verlustbeiträge der Elektroden, der Polverschaltung und der Anordnung der Elektroden im Gehäuse zusammen.

Es besteht daher ein Bedarf an Energiespeicherzellen, welche hinsichtlich der Entnahme von Wechselströmen hoher Frequenz geringere Verluste aufweisen und somit den Wirkungsgrad des die Energiespeicherzellen einsetzenden Systems verbessern.

### Offenbarung der Erfindung

Die vorliegende Erfindung schafft gemäß einem Aspekt eine elektrische Energiespeicherzelle, mit einer Vielzahl von ersten, flächig parallelen Elektrodenelementen, einer Vielzahl von flächig parallel zu den ersten Elektrodenelementen verlaufenden und flächig parallelen zweiten Elektrodenelementen, welche galvanisch von den ersten Elektrodenelementen getrennt sind, einem ersten flächigen Kontaktelement, welches die Vielzahl von ersten Elektrodenelementen elektrisch kontaktiert, einem zweiten flächigen Kontaktelement, welches die Vielzahl von zweiten Elektrodenelementen elektrisch kontaktiert, mindestens einem ersten flächigen Kontaktverbinder, welcher das erste Kontaktelement elektrisch kontaktiert, einem ersten Polkontakt, welcher den ersten flächigen Kontaktverbinder elektrisch kontaktiert, und einem zweiten Polkontakt, welcher mit dem zweiten flächigen Kontaktelement elektrisch verbunden ist.

Gemäß einem weiteren Aspekt schafft die vorliegende Erfindung ein Verfahren zum Herstellen einer elektrischen Energiespeicherzelle, mit den Schritten des elektrischen Kontaktierens einer Vielzahl von ersten, flächig parallelen Elektrodenelementen mit einem ersten flächigen Kontaktelement, des elektrischen Kontaktierens einer Vielzahl von zweiten, flächig parallel zu den ersten Elektrodenelementen verlaufenden und flächig parallelen Elektrodenelementen, welche galvanisch von den ersten Elektrodenelementen getrennt sind, mit einem zweiten flächigen Kontaktelement, des elektrischen Kontaktierens des ersten Kontaktelements mit mindestens einem ersten flächigen Kontaktverbinder, des elektrischen Kontaktierens des ersten flächigen Kontaktverbinders mit einem ersten Polkontakt, und des elektrischen Verbindens des zweiten flächigen Kontaktelements mit einem zweiten Polkontakt.

### Vorteile der Erfindung

Es ist eine Idee der vorliegenden Erfindung, die induktiven Verluste bei der Ansteuerung einer elektrischen Energiespeicherzelle durch einen geeigneten Aufbau der Energiespeicherzelle mit möglichst geringer interner Zellinduktivität zu reduzieren. Dazu werden die internen stromführenden Leiterelemente der Energiespeicherzelle in geeigneter Weise derart angeordnet, dass die durch die stromführenden Leiterelemente einerseits eine möglichst geringe Fläche einschließen, und andererseits die effektiven Strompfade eine möglichst geringe Länge unter maximal homogen verteilter Stromdichte aufweisen, so dass die induktive Innenimpedanz der Energiespeicherzelle minimiert wird.

Ein erheblicher Vorteil besteht darin, dass die Verlustenergie insbesondere bei der Entnahme von Wechselstrom hoher Frequenz aus der Energiespeicherzelle erheblich reduziert werden kann. Insbesondere bei Batteriesystemen mit integriertem Umrichter, sogenannten Batteriedirektumrichtern ("battery direct inverter", BDI), bei denen ein schneller Wechsel der Stromführung durch ein Batteriemodul zur Variation der Stromspannung erfolgt, ist diese Reduzierung der Verlustenergie von großem Vorteil.

Ein weiterer Vorteil besteht darin, dass die Kurzzeitdynamik derartiger Energiespeicherzellen verbessert wird, indem die Verzögerung der Energie- bzw. Lastabgabe der Energiespeicherzellen nach Lastwechseln minimiert wird. Dadurch kann in vorteilhafter Weise auf ansonsten möglicherweise ausgleichende Bauelemente wie beispielsweise Pufferkondensatoren verzichtet werden, was den Bauraumbedarf sowie die Fertigungskosten von Energiespeicherzellen einsetzenden Bauteilen senken kann.

Überdies kann durch die Vermeidung von induktiven Verlustanteilen durch die Energiespeicherzellen die elektromagnetische Verträglichkeit (EMV) verbessert werden, da die emittierten elektromagnetischen Felder vermindert und Störeinflüsse auf benachbarte Elektronikbauteile verringert werden können.

Gemäß einer Ausführungsform der erfindungsgemäßen Energiespeicherzelle können der erste Polkontakt und der zweite Polkontakt parallel zueinander geführt sein.

Gemäß einer erfindungsgemäßen Ausführungsform der erfindungsgemäßen Energiespeicherzelle können der erste flächige Kontaktverbinder flächig parallel zu den ersten und zweiten Elektrodenelementen verlaufen.

Gemäß der erfindungsgemäßen Ausführungsform kann die erfindungsgemäße Energiespeicherzelle weiterhin mindestens einen zweiten flächigen Kontaktverbinder, welcher das zweite Kontaktelement elektrisch kontaktiert, und welcher flächig parallel zu den ersten und zweiten Elektrodenelementen verläuft, aufweisen. Dabei kann der zweite Polkontakt den zweiten flächigen Kontaktverbinder elektrisch kontaktieren. Mithilfe des zweiten flächigen Kontaktverbinders kann vorteilhafterweise eine große Fläche geschaffen werden, über die Strom in der Energiespeicherzelle parallel entlang des ersten und des zweiten flächigen Kontaktverbinders fließt. Dadurch verringert sich der elektrische Innenwiderstand der Energiespeicherzelle erheblich. Weiterhin können dadurch Auswirkungen unerwünschter Effekte, wie beispielsweise des Skineffekts, reduziert werden.

Gemäß der erfindungsgemäßen Ausführungsform der erfindungsgemäßen Energiespeicherzelle kann der zweite flächige Kontaktverbinder in einem vorbestimmten Verbinderabstand flächig parallel zu dem ersten flächigen Kontaktverbinder verlaufen. Beispielsweise kann in einer Ausführungsform der vorbestimmte Verbinderabstand geringer als ein Abstand zwischen benachbarten Elektrodenelementen sein. Durch eine Reduktion des Verbinderabstands kann die für die induktive Innenimpedanz der Energiespeicherzelle relevante Durchflutungsfläche zwischen den elektrischen Strom führenden Bauteilen vorteilhafterweise verringert werden.

Gemäß einer weiteren Ausführungsform kann die erfindungsgemäße Energiespeicherzelle weiterhin eine erste Isolationsschicht aufweisen, welche zwischen dem ersten flächigen Kontaktverbinder und dem zweiten flächigen Kontaktverbinder angeordnet ist, und welche den ersten flächigen Kontaktverbinder und den zweiten flächigen Kontaktverbinder galvanisch voneinander trennt. Dadurch kann unter Beibehaltung eines vordefinierten Abstands in einfacher Weise eine Potentialtrennung zwischen den Kontaktverbindern im Inneren der Energiespeicherzelle gewährleistet werden.

Gemäß der erfindungsgemäßen Ausführungsform der erfindungsgemäßen Energiespeicherzelle können der erste Polkontakt und der zweite Polkontakt flächig ausgebildet sein. Dies bietet den Vorteil geringer Eingangs- bzw. Ausgangsimpedanz der Energiespeicherzelle.

Gemäß einer weiteren Ausführungsform kann die erfindungsgemäße Energiespeicherzelle weiterhin eine zweite Isolationsschicht aufweisen, welche zwischen dem ersten Polkontakt und dem zweiten Polkontakt angeordnet ist, und welche den ersten Polkontakt und den zweiten Polkontakt galvanisch voneinander trennt. Diese zweite Isolationsschicht kann integral mit der ersten Isolationsschicht ausgebildet werden, und gewährleistet unter Beibehaltung eines vordefinierten Polkontaktabstands in einfacher Weise eine Potentialtrennung zwischen den Polkontakten.

Gemäß einer weiteren Ausführungsform der erfindungsgemäßen Energiespeicherzelle können die ersten und zweiten Elektrodenelemente als Elektrodenstapel ausgebildet sein. Gemäß einer alternativen Ausführungsform der erfindungsgemäßen Energiespeicherzelle können die ersten und zweiten Elektrodenelemente spiralförmig ineinander gewickelt sein.

Dadurch kann eine Energiespeicherzelle geringer induktiver Innenimpedanz für verschiedene gängige Speicherzellengeometrien wie zylindrische Wickelzellen oder Pouchzellen implementiert werden.

Gemäß einer weiteren Ausführungsform kann die erfindungsgemäße Energiespeicherzelle weiterhin ein Gehäuse aufweisen, welches die ersten und zweiten Elektrodenelemente, die ersten und zweiten Kontaktelemente und den ersten Kontaktverbinder einschließt. Dabei können die ersten und zweiten Polkontakte als elektrische Anschlüsse der Energiespeicherzelle aus dem Gehäuse herausgeführt sein.

Gemäß einer weiteren Ausführungsform der erfindungsgemäßen Energiespeicherzelle kann mindestens eine der Komponenten des ersten Kontaktelements, des zweiten Kontaktelements und den ersten Kontaktverbinders als Teil des Gehäuses ausgebildet sein. Dadurch kann die Energiespeicherzelle in vorteilhafter Weise kompakt, mechanisch stabil und gegenüber der Außenwelt galvanisch getrennt ausgestaltet werden.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung einer elektrischen Energiespeicherzelle;
- Fig. 2: eine weitere schematische Darstellung einer elektrischen Energiespeicherzelle;
- Fig. 3: eine schematische Darstellung einer elektrischen Energiespeicherzelle gemäß einer weiteren Ausführungsform der Erfindung;
- Fig. 4: eine schematische Darstellung einer elektrischen Energiespeicherzelle gemäß einer weiteren Ausführungsform der Erfindung; und
- Fig. 5: eine schematische Darstellung eines Verfahrens zum Herstellen einer elektrischen Energiespeicherzelle gemäß einer weiteren Ausführungsform der Erfindung.

Elektrische Energiespeicherzellen im Sinne der vorliegenden Erfindung umfassen alle Einrichtungen, welche über einen vordefinierten Zeitraum elektrische Energie speichern und über einen weiteren Zeitraum wieder abgeben können. Energiespeicherzellen im Sinne der vorliegenden Erfindung umfassen dabei alle Arten von sekundären und primären Energiespeichern, insbesondere elektrisch kapazitive, elektrochemische (faradaysche) sowie kombiniert arbeitende Speichertypen. Die betrachteten Zeiträume können dabei von Sekunden bis hin zu Stunden, Tagen oder Jahren umfassen. Elektrische Energiespeicherzellen können beispielsweise Lithium-Ionen-Zellen, Lithium-Polymer-Zellen, Nickel-Metallhydrid-Zellen, Ultrakondensatoren, Superkondensatoren, Powerkondensatoren, BatCaps, Akkumulatoren auf der Basis von Blei, Zink, Natrium, Lithium, Magnesium, Schwefel oder anderen Metallen, Elementen oder Legierungen, oder ähnliche Systeme umfassen. Die Funktionalität der von der Erfindung umfassten elektrischen Energiespeicherzellen kann dabei auf Interkalationselektroden, Reaktionselektroden oder Legierungselektroden in Kombination mit wässrigen, aprotischen oder polymeren Elektrolyten beruhen.

Der Aufbau von elektrischen Energiespeicherzellen im Sinne der vorliegenden Erfindung kann dabei sowohl unterschiedliche äußere Aufbauformen, wie beispielsweise zylindrische Formen, prismatische Formen oder sogenannte "Pouch"-Formen, als auch unterschiedliche Elektrodenaufbauten, wie beispielsweise gewickelte, gestapelte, gefaltete oder sonstige Aufbauten, umfassen.

Elektrodenelemente im Sinne der vorliegenden Erfindung können aus verschiedenen elektrisch leitfähigen, beispielsweise metallischen Materialien hergestellt sein. Elektrodenelemente im Sinne der vorliegenden Erfindung können beschichtet, dreidimensional befüllt oder/und mit großer aktiver Oberfläche hergestellt sein. Dabei können die flächigen Elektrodenelemente je nach Speichertechnologie unterschiedliche Abmessungen aufweisen, beispielsweise kann die Dicke von Elektrodenelementen Größenordnungen von wenigen µm bis etliche mm aufweisen. Die Elektrodenelemente können gefaltet, gestapelt oder gewickelt sein, und es kann vorgesehen sein, zwischen den Elektrodenelementen Isolations- oder Separationsschichten auszubilden, welche die Elektrodenelemente galvanisch voneinander trennen. Es kann auch möglich sein, die Elektrodenelemente in bipolarer Form aufzubauen. Die flächige Form der Elektrodenelemente kann quadratisch, rechteckig, rund, elliptisch oder beliebig anders gestaltet sein.

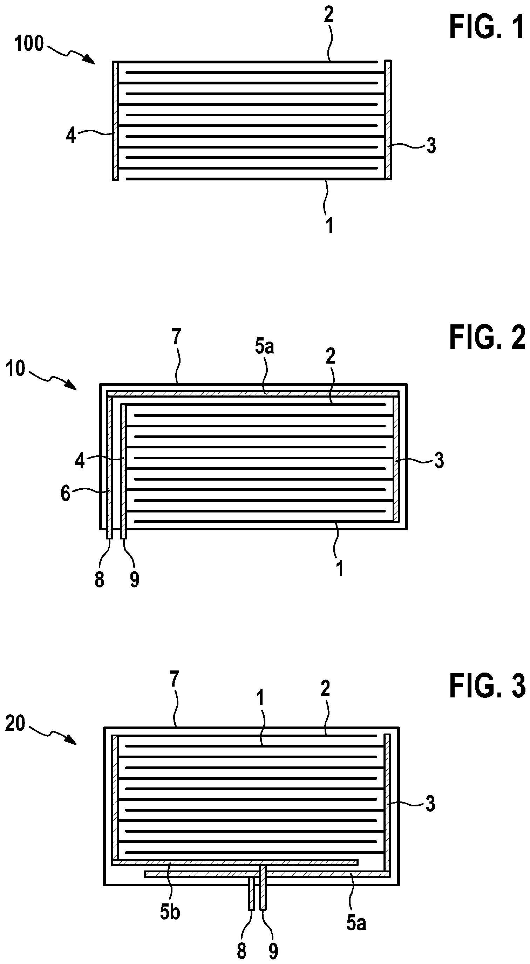

Fig. 1 zeigt eine schematische Darstellung einer elektrischen Energiespeicherzelle 100. Die Energiespeicherzelle 100 umfasst eine Vielzahl von ersten, flächig parallelen Elektrodenelementen 1 und eine Vielzahl von flächig parallel zu den ersten Elektrodenelementen 1 verlaufenden und flächig parallelen zweiten Elektrodenelementen 2, welche galvanisch von den ersten Elektrodenelementen 1 getrennt sind. Die Elektrodenelemente 1 und 2 können beispielsweise flache Schichten aus elektrisch leitfähigem Material sein, welche in einer kammartigen Struktur flächig ineinander verzahnt sind. Es kann auch möglich sein, dass die Elektrodenelemente 1 und 2 durch Wickeln oder Falten eines Bandes aus geschichteten Elektrodenelementen in die in Fig. 1 dargestellte alternierende Stapelform gebracht worden sind. Beispielsweise können die ersten und zweiten Elektrodenelemente 1 bzw. 2 als Elektrodenstapel ausgebildet sein. Alternativ dazu können die ersten und zweiten Elektrodenelemente 1 und 2 spiralförmig ineinander gewickelt sein. Es sollte dabei klar sein, dass eine Fülle an Möglichkeiten gibt, die Elektrodenelemente 1 und 2 mit Bezug zueinander anzuordnen, und dass die Auswahl einer Anordnung von der verwendeten Speichertechnologie, den Randbedingungen hinsichtlich der äußeren Form der Energiespeicherzelle 100 und/oder den zu erreichenden elektrischen Charakteristika der Energiespeicherzelle 100 abhängig sein kann. Beispielsweise kann es vorteilhaft sein, die Elektrodenelemente 1 und 2 derart anzuordnen, dass das innere Volumen der Energiespeicherzelle 100 maximal ausgenutzt wird.

Die Energiespeicherzelle 100 weist weiterhin ein erstes flächiges Kontaktelement 3 auf, welches die Vielzahl von ersten Elektrodenelementen 1 elektrisch kontaktiert. Gleichermaßen ist ein zweites flächiges Kontaktelement 4 vorgesehen, welches die Vielzahl von zweiten Elektrodenelementen 2 elektrisch kontaktiert. Die Kontaktelemente 3 und 4 können beispielsweise flache Bänder oder Schichten aus elektrisch leitfähigem Material sein, welches die Elektrodenelemente 1 bzw. 2 an gegenüberliegenden Seiten der flächig parallelen Schichten kontaktieren. Durch diese Art der Kontaktierung ergeben sich minimale Längen für die effektiven Strompfade und/oder eine maximal gleich verteilte Stromdichte über die Schichtung von Elektrodenelementen 1 bzw. 2 hinweg. Die flächige Kontaktierung der Kontaktelemente 3 und 4 kann beispielsweise über Schweiß-, Spritz-, Sputter- oder Klebeverfahren mit den Elektrodenelementen 1 bzw. 2 erreicht werden. Es können alternativ auch spezielle dreidimensional gefüllte Strukturen mit massiven Außenflächen eingesetzt werden, um die Geometrie der Elektrodenelemente 1 und 2 und der Kontaktelemente 3 und 4 auszubilden. Dabei kann es vorgesehen sein, den Überstand der Kontaktelemente 3 und 4 über die vertikale Erstreckung der jeweiligen Schichten von Elektrodenelementen 1 bzw. 2 hinaus so gering wie möglich zu halten, um überflüssige Strompfade zu vermeiden.

Fig. 2 zeigt eine schematische Darstellung einer elektrischen Energiespeicherzelle 10. Die Energiespeicherzelle 10 unterscheidet sich von der Energiespeicherzelle 100 in Fig. 1 dahingehend, dass ein erster flächiger Kontaktverbinder 5a vorgesehen ist, welcher das erste Kontaktelement 3 elektrisch kontaktiert, und welcher flächig parallel zu den ersten und zweiten Elektrodenelementen 1 bzw 2 verläuft. Der erste flächige Kontaktverbinder 5a kann beispielsweise eine Schicht aus leitfähigem Material sein, welches zwar keinen direkten galvanischen Kontakt mit den Elektrodenelementen 1 aufweist, jedoch indirekt über das erste Kontaktelement 3 mit den Elektrodenelementen 1 galvanisch kontaktiert ist. Das erste Kontaktelement 3 und der erste flächige Kontaktverbinder 5a können dabei auch aus separaten Bauteilen, beispielsweise angepasste Leitungsstrecken, aufgebaut sein, welche zwei oder mehr elektrisch untereinander verbundene Baukomponenten aufweisen. Die Energiespeicherzelle 10 weist weiterhin eine ersten Polkontakt 8 auf, welcher den ersten flächigen Kontaktverbinder 5a elektrisch kontaktiert. Gleichermaßen ist ein zweiter Polkontakt 9 vorgesehen, welcher mit dem zweiten flächigen Kontaktelement 4 elektrisch verbunden ist. Der erste Polkontakt 8 und der zweite Polkontakt 9 sind parallel zueinander geführt. Der erste Polkontakt 8 und der zweite Polkontakt 9 können beispielsweise flächige Schichten oder ebene Schichtelemente aufweisen, welche in einem Schichtbereich 6 parallel zueinander geführt sind. Zwischen dem ersten Polkontakt 8 und dem zweiten Polkontakt 9 kann beispielsweise eine (nicht dargestellte) Isolationsschicht angeordnet sein, welche den ersten Polkontakt 8 und den zweiten Polkontakt 9 galvanisch voneinander trennt. Dies kann beispielsweise eine Gasstrecke sein, es kann aber auch vorgesehen sein, eine Festkörperisolationsschicht zu verwenden.

In die Zeichenebene der in Fig. 2 dargestellten Energiespeicherzelle 10 hinein können die dargestellten Elemente flächig parallel zueinander in die Tiefe verlaufen. Dies kann beispielsweise über die gesamte Breite der Energiespeicherzelle 10 erfolgen, wobei es prinzipiell auch möglich sein kann nur Teilbereiche der Polkontakte 8 bzw. 9 flächig übereinander in die Tiefe zu führen. Die Polkontakte 8 bzw. 9 können dabei in einem vordefinierten Abschnitt der Energiespeicherzelle 10 nach außen geführt werden. Die Energiespeicherzelle 10 kann ein Gehäuse 7 aufweisen, welches die ersten und zweiten Elektrodenelemente 1 bzw. 2, die ersten und zweiten Kontaktelemente 3 und 4 und den ersten Kontaktverbinder 5a einschließt. Die ersten und zweiten Polkontakte 8 und 9 sind dabei als elektrische Anschlüsse der Energiespeicherzelle 10 aus dem Gehäuse 7 herausgeführt. Beispielsweise können die ersten und zweiten Polkontakte 8 und 9, oder alternativ zumindest einer der beiden ersten und zweiten Polkontakte 8 und 9, gegen das Gehäuse 7 elektrisch isoliert sein. Es kann auch möglich sein, einen der beiden ersten und zweiten Polkontakte 8 und 9 elektrisch mit dem Gehäuse 7 zu kontkatieren, falls das Gehäuse 7 aus einem elektrisch leitfähigen Material besteht, oder zumindest elektrisch leitfähige Teilbereiche aufweist. Falls das Gehäuse 7 aus einem elektrisch isolierenden Material, beispielsweise Kunststoff, besteht, können die beiden ersten und zweiten Polkontakte 8 und 9 direkt, das heißt ohne weitere Isolation, durch die Gehäusewand des Gehäuses 7 durchgeführt werden.

Es kann dabei beispielsweise möglich sein, mindestens eine der sich im Inneren der Energiespeicherzelle 10 befindlichen Komponenten als Teil des Gehäuses 7 auszubilden. Beispielsweise kann das Gehäuse 7 in einem Bereich über den Elektrodenelementen 1 und 2 in einem Teilbereich elektrisch leitfähig ausgebildet werden, so dass beispielsweise statt eines separaten ersten Kontaktverbinders 5a der ersten Kontaktverbinders 5a Teil des Gehäuses 7. In ähnlicher Weise können Teilbereiche des Gehäuses 7 auch zur Ausbildung eines oder mehrerer der Polkontakte 8 bzw. 9 herangezogen werden, beispielsweise in dem Schichtbereich 6, welcher an eine Seite des Gehäuses 7 angrenzt. Dabei ist jeweils darauf zu achten, dass das Gehäuse 7 selbst eine ausreichende galvanische Isolierung zwischen entsprechenden elektrisch leitfähigen Teilbereichen aufweist, um die Funktionalität der Energiespeicherzelle 10 im Gesamten zu gewährleisten.

Fig. 3 zeigt eine schematische Darstellung einer elektrischen Energiespeicherzelle 20. Die Energiespeicherzelle 20 unterscheidet sich von der Energiespeicherzelle 10 in Fig. 2 dahingehend, dass ein zweiter flächiger Kontaktverbinder 5b vorgesehen ist, welcher das zweite Kontaktelement 4 elektrisch kontaktiert, und welcher flächig parallel zu den ersten und zweiten Elektrodenelementen 1 bzw. 2 verläuft. Dabei kontaktiert der zweite Polkontakt 9 den zweiten flächigen Kontaktverbinder 5b elektrisch. Der zweite flächige Kontaktverbinder 5b kann in einem vorbestimmten Verbinderabstand flächig parallel zu dem ersten flächigen Kontaktverbinder 5a verlaufen. Beispielsweise kann der vorbestimmte Verbinderabstand geringer als ein Abstand zwischen benachbarten Elektrodenelementen 1 und 2 sein. Entsprechend kann eine (nicht dargestellte) Isolationsschicht zwischen dem ersten flächigen Kontaktverbinder 5a und dem zweiten flächigen Kontaktverbinder 5b angeordnet sein, welche die Kontaktverbinder 5a und 5b galvanisch voneinander trennt.

Die Polkontakte 8 und 9 führen parallel zueinander aus dem Gehäuse 7 der Energiespeicherzelle 20 hinaus. Um eine entsprechende galvanische Isolation beispielsweise zwischen dem Polkontakt 9 und dem ersten flächigen Kontaktverbinder 5a gewährleisten zu können, kann es notwendig sein, den zweiten flächigen Kontaktverbinder 5b elektrisch isoliert zu durchstoßen. Die Polkontakte 8 und 9 können beispielsweise ebenfalls flächige Schichtelemente, Bänder oder auch Drähte mit einem vordefinierten Polkontaktabstand zueinander sein. Die Polkontakte 8 und 9 können in diesem Fall als Durchführungen der Pole durch das Gehäuse 7 betrachtet werden, welche auf der gesamten Länge oder auf Teilbereichen der entsprechenden Gehäuseseite herausgeführt sind.

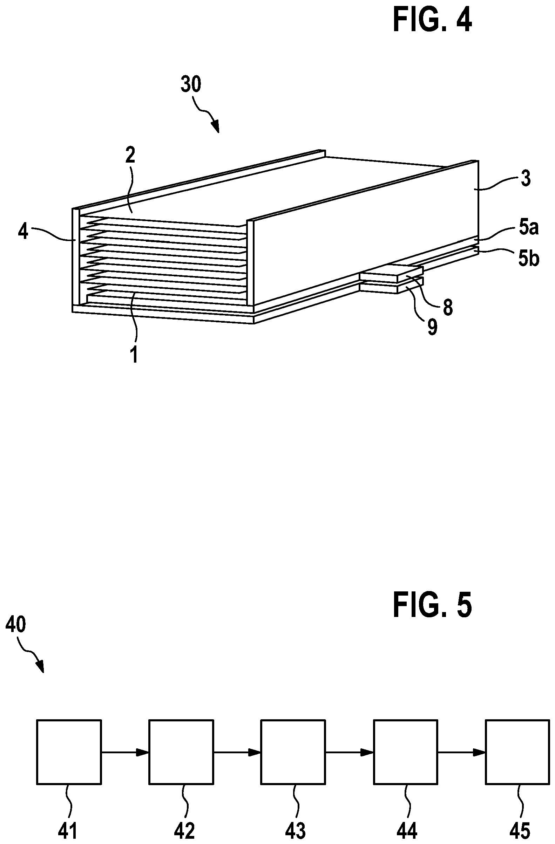

Fig. 4 zeigt eine schematische Darstellung einer elektrischen Energiespeicherzelle 30 in perspektivischer Ansicht. Die Energiespeicherzelle 30 unterscheidet sich von der Energiespeicherzelle 20 in den Fig. 3 im Wesentlichen dahingehend, dass die Polkontakte 8 und 9 in einer Ebene mit den flächigen Kontaktverbindern 5a und 5b aus dem aus Gründen der Übersichtlichkeit nicht gezeigten Gehäuse der Energiespeicherzelle 30 hinausgeführt sind. Dabei sind die Polkontakte 8 und 9 beispielhaft mittig entlang der Tiefenerstreckung der Energiespeicherzelle 30 angeordnet, es kann jedoch auch möglich sein, die Polkontakte 8 und 9 in Richtung einer der beiden Breitseiten der Energiespeicherzelle 30 zu verlagern, oder an mehreren Stellen oder entlang der gesamten Breitseiten Durchführungen der Polkontakte 8 und 9 vorzunehmen.

Insgesamt zeigen die Fig. 1 bis 4 lediglich beispielhafte Ausgestaltungsformen von Energiespeicherzellen. Variationen und Modifikationen können dabei unter Berücksichtigung von zweckbehafteten Konstruktionskriterien ausgestaltet werden. Generell ist es vorteilhaft, die Abstände zwischen stromführenden Elementen beider Polaritäten möglichst gering zu halten, um die durch diese Elemente umschlossene aktive Durchflutungsfläche zu minimieren. Dies bedeutet, dass die induktive Impedanz der stromführenden Elemente im Inneren der Energiespeicherzelle minimiert werden kann. Außerdem ist es vorteilhaft, die stromführenden Elemente möglichst großflächig auszugestalten, um die Stromdichte möglichst homogen zu verteilen. Ist eine ideal flächige, eng an den aktiven Bereichen der Elektrodenelemente anliegende Polkontaktierung nur unter bestimmte Randbedingungen möglich, wie beispielsweise Sicherheitsanforderungen oder technischen Zwängen, so kann ist zumindest darauf zu achten, die Zusammenführung der stromführenden Elemente unterschiedlicher Polarität in geringem Abstand zueinander zu gewährleisten.

Die dargestellten Energiespeicherzellen können beispielsweise bevorzugt in Systemen eingesetzt werden, in denen Wechselströme hoher Frequenz aus den Energiespeicherzellen entnommen werden, beispielsweise in Batteriedirektumrichtern mit Ansteuerfrequenzen oberhalb von etwa 100 Hz. In diesen Systemen können aufgrund der Bauweise der Energiespeicherzellen induktive Verluste aufgrund der hohen Wechselstromfrequenz minimiert werden. Gleichzeitig verbessert sich das Ansprechverhalten der Energiespeicherzellen im Kurzzeitbereich, was die Dynamik und Zuverlässigkeit der Systeme erheblich verbessert.

Im Allgemeinen sind die Energiespeicherzellen auch für Anwendungen im Systemen mit kleineren Ansteuerfrequenzen vorteilhaft, bespielsweise in Systemen mit diskreten Schaltvorgängen im Sekundenbereich, welche beim Schalten entsprechend hohe Frequenzanteile aufweisen können.

Fig. 5 zeigt eine schematische Darstellung eines Verfahrens 40 zum Herstellen einer elektrischen Energiespeicherzelle, insbesondere einer der in den Fig. 2 bis 4 schematisch gezeigten Energiespeicherzellen 10, 20 oder 30. In einem ersten Schritt 41 erfolgt ein elektrisches Kontaktieren einer Vielzahl von ersten, flächig parallelen Elektrodenelementen 1 mit einem ersten flächigen Kontaktelement 3. In einem zweiten Schritt 42 erfolgt ein elektrisches Kontaktieren einer Vielzahl von zweiten, flächig parallel zu den ersten Elektrodenelementen 1 verlaufenden und flächig parallelen Elektrodenelementen 2, welche galvanisch von den ersten Elektrodenelementen 1 getrennt sind, mit einem zweiten flächigen Kontaktelement 4. Dabei können die ersten und zweiten Kontaktelemente 3 und 4 beispielsweise durch ein Schweißverfahren, ein Spritzverfahren, ein Sputterverfahren oder ein Klebverfahren mit den Elektrodenelementen kontaktiert werden. Vorzugweise ist dabei der elektrische Widerstand der Verbindungsstelle zwischen dem jeweiligen Kontaktelement 3, 4 und den Elektrodenelementen 1,2 so gering wie möglich zu halten.

Die ersten und zweiten flächig parallelen Elektrodenelemente 1 bzw. 2 können beispielsweise vor dem Kontaktieren mit den jeweiligen Kontaktelementen 3 oder 4 in geeigneter Weise gestapelt, gefaltet oder gewickelt werden, je nach gewünschter Zelltopologie. Beispielsweise können für eine zylindrische Zelle die ersten und zweiten flächig parallelen Elektrodenelemente 1 bzw. 2 durch eine isolierende Separatorschicht getrennt in sogenannter "jelly roll"-Topologie, das heißt, in einer im Querschnitt eine abwechselnde Folge unterschiedlicher Elektroden- bzw. Separatorschichten aufweisenden zylindrischen Wicklung, aufgewickelt werden. Alternativ können für eine sogenannte Pouch-Zelle die ersten und zweiten flächig parallelen Elektrodenelemente 1 bzw. 2 unter Verwendung einer isolierenden Separatorschicht in mäanderförmigen Bahnen aufeinander gefaltet bzw. geschichtet werden. Für die Ausgestaltung einer prismatischen Zelle kann beispielsweise eine "racetrack pancake"-Topologie oder eine "racetrack double pancake"-Topologie verwendet werden, das heißt, eine flache spiralförmige Wicklung von ersten und zweiten flächig parallelen Elektrodenelemente 1 bzw. 2, welche entlang einer Querschnittsrichtung der entstehenden Wicklung gestaucht bzw. komprimiert werden kann, um eine "racetrack"-Form, das heißt, eine über enge Außenradien verbundene, im Wesentlichen parallel verlaufende Wicklungsbahnen zu erhalten.

In einem dritten Schritt 43 erfolgt ein elektrisches Kontaktieren des ersten Kontaktelements 3 mit mindestens einem ersten flächigen Kontaktverbinder 5a, welcher flächig parallel zu den ersten und zweiten Elektrodenelementen 1 bzw. 2 verlaufen kann. In einem vierten Schritt 44 erfolgt ein elektrisches Kontaktieren des ersten flächigen Kontaktverbinders 5a mit einem ersten Polkontakt 8. Schließlich erfolgt in einem fünften Schritt 45 ein elektrisches Verbinden des zweiten flächigen Kontaktelements 4 mit einem zweiten Polkontakt 9. Dabei können der erste Polkontakt 8 und der zweite Polkontakt 9 parallel zueinander geführt werden.

Optional kann ein Einschließen der ersten und zweiten Elektrodenelemente 1, 2, der ersten und zweiten Kontaktelemente 3, 4 und des ersten Kontaktverbinders 5a in einem Gehäuse 7 erfolgen. Dabei können die ersten und zweiten Polkontakte 8, 9 als elektrische Anschlüsse der Energiespeicherzelle aus dem Gehäuse 7 herausgeführt werden.

## Patentansprüche

1. Elektrische Energiespeicherzelle (10; 20; 30), mit:
einer Vielzahl von ersten, flächig parallelen Elektrodenelementen (1);
einer Vielzahl von flächig parallel zu den ersten Elektrodenelementen (1) verlaufenden und flächig parallelen zweiten Elektrodenelementen (2), welche galvanisch von den ersten Elektrodenelementen (1) getrennt sind;
einem ersten flächigen Kontaktelement (3), welches die Vielzahl von ersten Elektrodenelementen (1) elektrisch kontaktiert;
einem zweiten flächigen Kontaktelement (4), welches die Vielzahl von zweiten Elektrodenelementen (2) elektrisch kontaktiert;
mindestens einem ersten flächigen Kontaktverbinder (5a), welcher das erste Kontaktelement (3) elektrisch kontaktiert;
einem ersten Polkontakt (8), welcher flächig ausgebildet ist und welcher den ersten flächigen Kontaktverbinder (5a) elektrisch kontaktiert; und
einem zweiten Polkontakt (9), welcher flächig ausgebildet ist und welcher mit dem zweiten flächigen Kontaktelement (4) elektrisch verbunden ist,
weiterhin mit:
mindestens einem zweiten flächigen Kontaktverbinder (5b), welcher das zweite Kontaktelement (4) elektrisch kontaktiert, und welcher flächig parallel zu den ersten und zweiten Elektrodenelementen (1; 2) verläuft,
wobei der zweite Polkontakt (9) den zweiten flächigen Kontaktverbinder (5b) elektrisch kontaktiert,
wobei der zweite flächige Kontaktverbinder (5b) in einem vorbestimmten Verbinderabstand flächig parallel zu dem ersten flächigen Kontaktverbinder (5a) verläuft,
und
wobei der vorbestimmte Verbinderabstand geringer als ein Abstand zwischen benachbarten Elektrodenelementen (1; 2) ist.

2. Elektrische Energiespeicherzelle (10; 20; 30) nach Anspruch 1, wobei der mindestens eine erste flächige Kontaktverbinder (5a) flächig parallel zu den ersten und zweiten Elektrodenelementen (1; 2) verläuft.

3. Elektrische Energiespeicherzelle (10; 20; 30) nach einem der Ansprüche 1 und 2, wobei der erste Polkontakt (8) und der zweite Polkontakt (9) parallel zueinander geführt sind.

4. Elektrische Energiespeicherzelle (10; 20; 30) nach Anspruch 1, weiterhin mit:
einer ersten Isolationsschicht, welche zwischen dem ersten flächigen Kontaktverbinder (5a) und dem zweiten flächigen Kontaktverbinder (5b) angeordnet ist, und welche den ersten flächigen Kontaktverbinder (5a) und den zweiten flächigen Kontaktverbinder (5b) galvanisch voneinander trennt.

5. Elektrische Energiespeicherzelle (10; 20; 30) nach Anspruch 1, weiterhin mit:
einer zweiten Isolationsschicht, welche zwischen dem ersten Polkontakt (8) und dem zweiten Polkontakt (9) angeordnet ist, und welche den ersten Polkontakt (8) und den zweiten Polkontakt (9) galvanisch voneinander trennt.

6. Elektrische Energiespeicherzelle (10; 20; 30) nach einem der Ansprüche 1 bis 5, wobei die ersten und zweiten Elektrodenelemente (1; 2) als Elektrodenstapel ausgebildet sind.

7. Elektrische Energiespeicherzelle (10; 20; 30) nach einem der Ansprüche 1 bis 6, wobei die ersten und zweiten Elektrodenelemente (1; 2) spiralförmig ineinander gewickelt sind.

8. Elektrische Energiespeicherzelle (10; 20; 30) nach einem der Ansprüche 1 bis 7, weiterhin mit:
einem Gehäuse (7), welches die ersten und zweiten Elektrodenelemente (1; 2), die ersten und zweiten Kontaktelemente (3; 4) und den ersten Kontaktverbinder (5a) einschließt,
wobei die ersten und zweiten Polkontakte (8; 9) als elektrische Anschlüsse der Energiespeicherzelle (10; 20; 30) aus dem Gehäuse (7) herausgeführt sind.

9. Elektrische Energiespeicherzelle (10; 20; 30) nach Anspruch 8, wobei mindestens eine der Komponenten des ersten Kontaktelements (3), des zweiten Kontaktelements (4) und den ersten Kontaktverbinders (5a) als Teil des Gehäuses (7) ausgebildet sind.

10. Verfahren (40) zum Herstellen einer elektrischen Energiespeicherzelle (10; 20; 30) nach einem der Ansprüche 1 bis 9, mit den Schritten:
elektrisches Kontaktieren (41) einer Vielzahl von ersten, flächig parallelen Elektrodenelementen (1) mit einem ersten flächigen Kontaktelement (3);
elektrisches Kontaktieren (42) einer Vielzahl von zweiten, flächig parallel zu den ersten Elektrodenelementen (1) verlaufenden und flächig parallelen Elektrodenelementen (2), welche galvanisch von den ersten Elektrodenelementen (1) getrennt sind, mit einem zweiten flächigen Kontaktelement (4);
elektrisches Kontaktieren (43) des ersten Kontaktelements (3) mit mindestens einem ersten flächigen Kontaktverbinder (5a);
elektrisches Kontaktieren (44) des ersten flächigen Kontaktverbinders (5a) mit einem ersten Polkontakt (8); und
elektrisches Verbinden (45) des zweiten flächigen Kontaktelements (4) mit einem zweiten Polkontakt (9).

11. Verfahren (40) nach Anspruch 10, weiterhin mit dem Schritt:
Einschließen der ersten und zweiten Elektrodenelemente (1; 2), der ersten und zweiten Kontaktelemente (3; 4) und des ersten Kontaktverbinders (5a) in einem Gehäuse (7), wobei die ersten und zweiten Polkontakte (8; 9) parallel zueinander geführt und als elektrische Anschlüsse der Energiespeicherzelle (10; 20; 30) aus dem Gehäuse (7) herausgeführt werden.

## Claims

1. Electrical energy storage cell (10; 20; 30), comprising:
a multiplicity of first two-dimensionally parallel electrode elements (1);
a multiplicity of second two-dimensionally parallel electrode elements (2) which run in a two-dimensionally parallel manner to the first electrode elements (1) and are galvanically separated from the first electrode elements (1);
a first two-dimensional contact element (3) which makes electrical contact with the multiplicity of first electrode elements (1);
a second two-dimensional contact element (4) which makes electrical contact with the multiplicity of second electrode elements (2);
at least one first two-dimensional contact connector (5a) which makes electrical contact with the first contact element (3);
a first pole contact (8) which is of two-dimensional design and which makes electrical contact with the first two-dimensional contact connector (5a); and
a second pole contact (9) which is of two-dimensional design and which is electrically connected to the second two-dimensional contact element (4),
furthermore comprising:
at least one second two-dimensional contact connector (5b) which makes electrical contact with the second contact element (4) and which runs in a two-dimensionally parallel manner to the first and second electrode elements (1; 2),
wherein the second pole contact (9) makes electrical contact with the second two-dimensional contact connector (5b),
wherein the second two-dimensional contact connector (5b) runs in a two-dimensionally parallel manner to the first two-dimensional contact connector (5a) at a predetermined connector distance,
and
wherein the predetermined connector distance is smaller than a distance between adjacent electrode elements (1; 2).

2. Electrical energy storage cell (10; 20; 30) according to Claim 1, wherein the at least one first two-dimensional contact connector (5a) runs in a two-dimensionally parallel manner to the first and second electrode elements (1; 2).

3. Electrical energy storage cell (10; 20; 30) according to either of Claims 1 and 2, wherein the first pole contact (8) and the second pole contact (9) are guided parallel to each other.

4. Electrical energy storage cell (10; 20; 30) according to Claim 1, furthermore comprising:
a first insulating layer which is arranged between the first two-dimensional contact connector (5a) and the second two-dimensional contact connector (5b) and which galvanically separates the first two-dimensional contact connector (5a) and the second two-dimensional contact connector (5b) from each other.

5. Electrical energy storage cell (10; 20; 30) according to Claim 1, furthermore comprising:
a second insulating layer which is arranged between the first pole contact (8) and the second pole contact (9) and which galvanically separates the first pole contact (8) and the second pole contact (9) from each other.

6. Electrical energy storage cell (10; 20; 30) according to one of Claims 1 to 5, wherein the first and second electrode elements (1; 2) are designed as electrode stacks.

7. Electrical energy storage cell (10; 20; 30) according to one of Claims 1 to 6, wherein the first and second electrode elements (1, 2) are wound spirally one inside the other.

8. Electrical energy storage cell (10; 20; 30) according to one of Claims 1 to 7, furthermore comprising:
a housing (7) which encloses the first and second electrode elements (1; 2), the first and second contact elements (3; 4) and the first contact connector (5a),
wherein the first and second pole contacts (8; 9) are guided out of the housing (7) as electrical terminals of the energy storage cell (10; 20; 30).

9. Electrical energy storage cell (10; 20; 30) according to Claim 8, wherein
at least one of the components of the first contact element (3), of the second contact element (4) and of the first contact connector (5a) are designed as part of the housing (7).

10. Method (40) for producing an electrical energy storage cell (10; 20; 30) according to one of Claims 1 to 9, comprising the following steps:
making electrical contact (41) with a multiplicity of first two-dimensionally parallel electrode elements (1) by a first two-dimensional contact element (3);
making electrical contact (42) with a multiplicity of second two-dimensionally parallel electrode elements (2) which run in a two-dimensionally parallel manner to the first electrode elements (1) and are galvanically separated from the first electrode elements (1), by a second two-dimensional contact element (4);
making electrical contact (43) with the first contact element (3) by at least one first two-dimensional contact connector (5a);
making electrical contact (44) with the first two-dimensional contact connector (5a) by a first pole contact (8); and
electrically connecting (45) the second two-dimensional contact element (4) to a second pole contact (9).

11. Method (40) according to Claim 10, furthermore comprising the following step:
enclosing the first and second electrode elements (1; 2), the first and second contact elements (3; 4) and the first contact connector (5a) in a housing (7), wherein the first and second pole contacts (8; 9) are guided parallel to one another and are guided out of the housing (7) as electrical terminals of the energy storage cell (10; 20; 30).

## Revendications

1. Cellule d'accumulation d'énergie électrique (10 ; 20 ; 30), comprenant :
une pluralité de premiers éléments d'électrodes plans parallèles (1) ;
une pluralité de deuxièmes éléments d'électrodes plans parallèles (2) s'étendant de manière plane parallèlement aux premiers éléments d'électrodes (1) et qui sont séparés galvaniquement des premiers éléments d'électrodes (1) ;
un premier élément de contact plan (3) qui est en contact électrique avec la pluralité de premiers éléments d'électrodes (1) ;
un deuxième élément de contact plan (4) qui est en contact électrique avec la pluralité de deuxièmes éléments d'électrodes (2) ;
au moins un premier connecteur de contact plan (5a) qui est en contact électrique avec le premier élément de contact (3) ;
un premier contact polaire (8) qui est réalisé de manière plane et qui est en contact électrique avec le premier connecteur de contact plan (5a) ; et
un deuxième contact polaire (9) qui est réalisé de manière plane et qui est relié électriquement au deuxième élément de contact plan (4),
comprenant en outre :
au moins un deuxième connecteur de contact plan (5b) qui est en contact électrique avec le deuxième élément de contact (4) et qui s'étend de manière plane parallèlement aux premier et deuxième éléments d'électrodes (1 ; 2),
dans laquelle le deuxième contact polaire (9) est en contact électrique avec le deuxième connecteur de contact plan (5b),
dans laquelle le deuxième connecteur de contact plan (5b) s'étend de manière plane parallèlement au premier connecteur de contact plan (5a) avec un espacement prédéterminé des connecteurs,
et
dans laquelle l'espacement prédéterminé des connecteurs est inférieur à un espacement entre des éléments d'électrodes (1 ; 2) adjacents.

2. Cellule d'accumulation d'énergie électrique (10 ; 20 ; 30) selon la revendication 1, dans laquelle ledit au moins un premier connecteur de contact plan (5a) s'étend de manière plane parallèlement aux premier et deuxième éléments d'électrodes (1 ; 2).

3. Cellule d'accumulation d'énergie électrique (10 ; 20 ; 30) selon l'une des revendications 1 et 2, dans laquelle le premier contact polaire (8) et le deuxième contact polaire (9) sont guidés parallèlement l'un à l'autre.

4. Cellule d'accumulation d'énergie électrique (10 ; 20 ; 30) selon la revendication 1, comprenant en outre :
une première couche isolante qui est disposée entre le premier connecteur de contact plan (5a) et le deuxième connecteur de contact plan (5b) et qui sépare galvaniquement l'un de l'autre le premier connecteur de contact plan (5a) et le deuxième connecteur de contact plan (5b).

5. Cellule d'accumulation d'énergie électrique (10 ; 20 ; 30) selon la revendication 1, comprenant en outre :
une deuxième couche isolante qui est disposée entre le premier contact polaire (8) et le deuxième contact polaire (9) et qui sépare galvaniquement l'un de l'autre le premier contact polaire (8) et le deuxième contact polaire (9).

6. Cellule d'accumulation d'énergie électrique (10 ; 20 ; 30) selon l'une des revendications 1 à 5, dans laquelle les premier et deuxième éléments d'électrodes (1 ; 2) sont réalisés sous la forme d'empilements d'électrodes.

7. Cellule d'accumulation d'énergie électrique (10 ; 20 ; 30) selon l'une des revendications 1 à 6, dans laquelle les premier et deuxième éléments d'électrodes (1 ; 2) sont enroulés l'un sur l'autre en spirale.

8. Cellule d'accumulation d'énergie électrique (10 ; 20 ; 30) selon l'une des revendications 1 à 7, comprenant en outre :
un boîtier (7) dans lequel sont logés les premier et deuxième éléments d'électrodes (1 ; 2), les premier et deuxième éléments de contact (3 ; 4) et le premier connecteur de contact (5a),
dans laquelle les premier et deuxième contacts polaires (8 ; 9) sont sortis du boîtier (7) en tant que bornes électriques de la cellule d'accumulation d'énergie (10 ; 20 ; 30).

9. Cellule d'accumulation d'énergie électrique (10 ; 20 ; 30) selon la revendication 8, dans laquelle au moins l'un des composants du premier élément de contact (3), du deuxième élément de contact (4) et du premier connecteur de contact (5a) est réalisé sous la forme d'une partie du boîtier (7).

10. Procédé (40) de fabrication d'une cellule d'accumulation d'énergie électrique (10 ; 20 ; 30) selon l'une des revendications 1 à 9, comprenant les étapes consistant à :
mettre en contact électrique (41) une pluralité de premiers éléments d'électrodes plans parallèles (1) avec un premier élément de contact plan (3) ;
mettre en contact électrique (42) une pluralité de deuxièmes éléments d'électrodes plans parallèles (2) s'étendant de manière plane parallèlement aux premiers éléments d'électrodes (1) et qui sont séparés galvaniquement des premiers éléments d'électrodes (1), avec un deuxième élément de contact plan (4) ;
mettre en contact électrique (43) le premier élément de contact (3) avec au moins un premier connecteur de contact plan (5a) ;
mettre en contact électrique (44) le premier connecteur de contact plan (5a) avec un premier contact polaire (8) ; et
relier électriquement (45) le deuxième élément de contact plan (4) à un deuxième contact polaire (9).

11. Procédé (40) selon la revendication 10, comprenant en outre l'étape consistant à :
loger les premier et deuxième éléments d'électrodes (1 ; 2), les premier et deuxième éléments de contact (3 ; 4) et le premier connecteur de contact (5a) dans un boîtier (7),
dans lequel les premier et deuxième contacts polaires (8 ; 9) sont guidés parallèlement l'un à l'autre et sont sortis du boîtier (7) en tant que bornes électriques de la cellule d'accumulation d'énergie (10 ; 20 ; 30).
